Europäisches Patentamt

European Patent Office

Office européen des brevets

(19)

(11) Veröffentlichungsnummer: **0 019 898**
**B2**

(12) **NEUE EUROPÄISCHE PATENTSCHRIFT**

(45) Veröffentlichungstag der neuen Patentschrift:
09.03.88

(51) Int. Cl.⁴: **C 05 F 9/00, C 05 F 7/00**

(21) Anmeldenummer: **80102936.4**

(22) Anmeldetag: **27.05.80**

(54) Verfahren zum Herstellen eines lagerbeständigen und biologisch aktiven Bodenverbesserungsmittels.

(30) Priorität: **29.05.79 DE 2921709**

(43) Veröffentlichungstag der Anmeldung:
**10.12.80 Patentblatt 80/25**

(45) Bekanntmachung des Hinweises auf die Patenterteilung:
**09.06.82 Patentblatt 82/23**

(45) Bekanntmachung des Hinweises auf die Entscheidung
über den Einspruch:
**09.03.88 Patentblatt 88/10**

(84) Benannte Vertragsstaaten:
**AT BE CH DE FR GB IT LI LU NL SE**

(56) Entgegenhaltungen:
BE - A - 695 144
CH - A - 420 224
DE - A - 2 352 474
DE - A - 2 628 772
DE - B - 1 255 678
DE - B - 2 226 729
DE - C - 1 145 646
FR - A - 803 116

Zeitschrift "Städtehygiene", 8 (1962), Seite 147
ANS-Mitteilungen Nr. 34 aus der Zeitschrift "Wasser +
Abwasser" (1972), Seite 237
Kumpf, Mass, Straub "Müll- und Abfallbeseitigung" Teil
5040, Lfg. 1966, Seiten 3,5 und Teil 5810, Lfg. 1967,
Seite 3

(73) Patentinhaber: **FAUN Aktiengesellschaft, Postfach 8,
D-8560 Lauf a. d. Pegnitz (DE)**

(72) Erfinder: **Tabasaran, Oktay, Prof. Dr.-Ing.,
Lindpaintnerstrasse 28, D-7000 Stuttgart 1 (DE)**
Erfinder: **Hartmann, Randolph, Dr.-Ing., Unterer
Lussweg 7, D-7500 Karlsruhe 41 (DE)**
Erfinder: **Schriewer, Helmut, Ing.grad.,
Pommernstrasse 7, D-6729 Maximiliansau (DE)**

(74) Vertreter: **Eisenführ & Speiser, Martinistrasse 24,
D-2800 Bremen 1 (DE)**

(56) Entgegenhaltungen: (Fortsetzung)
Aufsatz "Schweinfurter Anlage zur gemeinsamen
Behandlung" von H. Meyer in der Zeitschrift
"Kommunalwirtschaft", Heft 9, (1965)
Zeitschrift GWF vom 15.06.1954, Seite 382
Aufsatz "Kapillartrocknung für Müll und
Klärschlammgemische und ein neuer Weg für
Siedlungsabfälle" von F. Caspari im Sonderdruck aus
"Städtehygiene" 8/1962, Seite 3
Aufsatz "Ein neuer Weg zur Aufbereitung und
Verwertung von Siedlungsabfällen" von H. Meyer im
Sonderdruck "Der Städtetag" 5/1964, Seite 1

## Beschreibung

Die Erfindung betrifft ein Verfahren zum Herstellen eines lagerbeständigen und biologisch aktiven Bodenverbesserungsmittels aus einem aus zerkleinertem Müll und teilweise entwässertem Klärschlamm mit einem Wassergehalt von etwa 50 bis 90 Gewichtsprozent bestehendem Gemisch, wobei das Gemisch einer Pressverformung auf bis zu etwa ein Drittel seines Volumens ohne Wasseraustritt unterworfen wird und die hierbei erhaltenen Presslinge durch Lagern in eine Temperatur von etwa 50 bis 70°C aufweisenden Rottestapeln an der Luft einem Rottervorgang unterworfen und dabei getrocknet werden.

Ein solches Verfahren ergibt sich aus der DE-C-1 145 646 und ist in der Praxis unter dem Namen «Brikollare» bekannt geworden. Dabei werden die erhaltenen Presslinge unmittelbar nach der Verformung getrocknet, wobei es genügt, die Presslinge einfach an der Luft lagern zu lassen. Der dabei einsetzende, spontane Trocknungsprozess beruht auf einer lebhaften Verpilzung in den Presslingen, während diese in der sogenannten Rottehalle gestapelt sind. Während dieser sogenannten Heiss- oder Intensivrotte werden innerhalb von zwei bis drei Wochen ungefähr die Hälfte bis Dreiviertel der biochemisch leicht zersetzbaren Stoffe dissimiliert, wobei davon auszugehen ist, dass im Durchschnitt etwa 42% der organischen Masse in den Presslingen aus solchen biochemisch leicht zersetzbaren Stoffen bestehen. Der hauptsächliche Abbau (Dissimilation) erfolgt dabei in den ersten vierzehn Tagen und danach verlangsamt sich die Zersetzungsgeschwindigkeit infolge Wassermangels. Nach dem bekannten Verfahren lässt sich demgemäss ein entseuchter, in der Rotte fortgeschrittener Kompost gewinnen, jedoch kein Fertigkompost oder Spezialkompost, da nun einmal ein wesentlicher Teil der organischen Masse biologisch unabgebaut bleibt.

Während dieser Intensivrotte sind die Belüftungsbedingungen vorwiegend von der Höhe der herrschenden Reaktionstemperatur abhängig. Mit zunehmender Wasserverdunstung bzw. Wasserverbrauch durch die Verpilzung wird die Luftzufuhr intensiviert und somit der metabolische Stoffumsatz beschleunigt, bis die mangelnde Feuchtigkeit zum begrenzenden Parameter wird, und die Glühverlustreduktionsrate anfängt, immer geringer zu werden. Daher ist es praktisch ausgeschlossen, bei einer Anfangsfeuchte im Gemisch unter 60% während der Hallenrotte der Presslinge ein vollständiges Eliminieren leicht zersetzbarer Substanzen zu erreichen. Nun ist es jedoch auch nicht ohne weiteres möglich, den anfänglichen Wassergehalt zu erhöhen, da beispielsweise bei einem Wassergehalt im Pressling von mehr als 55% unter Umständen anaerobe Stellen gebildet werden, was tunlichst vermieden werden soll. Dabei spielen jedoch die Materialkorngrösse und das damit zusammenhängende Kapillarensystem eine bedeutende Rolle, so dass sich gegebenenfalls auch bei höheren Wassergehalten derartige anaerobe Stellen vermeiden lassen.

Die der Erfindung zugrundeliegende Aufgabe wird somit darin gesehen, ein Verfahren der eingangs erläuterten Art zu schaffen, mit dessen Hilfe sich auf besonders einfache und zweckmässige Weise Fertigkompost oder Spezialkompost gewinnen lässt.

Diese Aufgabe wird erfindungsgemäss dadurch gelöst, dass man die Rottestapel mit Beginn des dritten bis fünften Rottetages einer sieben bis vierzehn Tage dauernden Zusatzbefeuchtung unterwirft, mittels derer nach etwa drei bis fünf Wochen sämtliche relativ leicht abbaubaren Substanzen vollständig abgebaut sind.

Durch diese erfindungsgemässe Ausgestaltung des vorbekannten Verfahrens ist es gelungen, die Kompostierungsvorgänge derart zu beschleunigen, dass sämtliche Reserven an leicht abbaubaren Bestandteilen erschöpft werden konnten und sich bei entsprechenden Versuchen ein Produkt mit einem Glühverlust von lediglich 38,5% ergab. Am neunzehnten Rottetag entnommene Proben wiesen mit 37,5% sogar einen noch niedrigeren Gehalt an organischer Substanz und ein C/N-Verhältnis von 18,6 auf. Ähnliche Kennwerte werden in Kompostwerken heute nur von Fertigkompost erreicht, der z.B. dadurch entsteht, dass die Presslinge im Anschluss an drei Wochen Hallenrotte zerkleinert und circa drei Monate lang auf Miete gesetzt werden.

Somit lässt sich nach der Erfindung ein hervorragender Kompost gewinnen, der den Qualitätskriterien von Fertigkompost entspricht.

Gemäss einer bevorzugten Ausführungsform des Verfahrens ist die Wasserzugabe zu Beginn der Zusatzbefeuchtung höher als am Ende derselben. Im übrigen lässt sich die täglich erforderliche Wassermenge den jeweiligen Rottebedingungen anpassen und nach einer Kennlinie steuern. Dabei kann es zweckmässig sein, im Rahmen der Zusatzbefeuchtung die tägliche Wasserzugabe in zwölf oder vierundzwanzig Intervalle aufzuteilen. Gemäss einer bevorzugten Ausführungsform wurden dabei im Laufe von vierzehn Tagen 156 kg Wasser pro Kubikmeter Gemisch zugesetzt.

Ferner hat es sich als vorteilhaft erwiesen, die Zusatzbefeuchtung der Rottestapel jeweils mittels eines über Kopf derselben angeordneten und mit Düsen versehenen Rohrleitungssystems durchzuführen. Durch ein solches Rohrleitungssystem lässt sich das der Zusatzbefeuchtung dienende Wasser staubfein auf die Rottestapel verteilen. Die Überkopfbewässerung lässt sich dabei so gestalten, dass mindestens der vierte Teil oder maximal eine gesamte Tagesproduktion an Presslingsstapeln individuell bewässert werden kann.

Ansonsten wird die Zusatzbefeuchtung zweckmässigerweise derart gesteuert, dass am Ende der etwa drei- bis fünfwöchigen Rotte die Presslingsstapel eine Restfeuchte von 25 bis 35% Wassergehalt aufweisen. Sie bieten damit optimale Bedingungen für die Weiterverarbeitung (Zerkleinern, Sichten und Sieben).

Wie erläutert wurde, erfolgt bei dem erfindungsgemässen Verfahren eine Zusatzbefeuchtung während der sogenannten Heiss- bzw. Intensivrotte, die zunächst einmal von dem bereits ursprünglich vorhandenen Wassergehalt ermöglicht wird. Hierdurch lässt sich die am Ende des Verfahrens erfolgende Trocknung derart hinausschieben, dass in der beschriebenen Weise bis dahin alle relativ leicht abbaubaren Substanzen, insbesondere solche oxydierbarer, organischer Art, tatsächlich in vollem Umfange auch abgebaut sind und somit der gewünschte Fertigkompost entstanden ist.

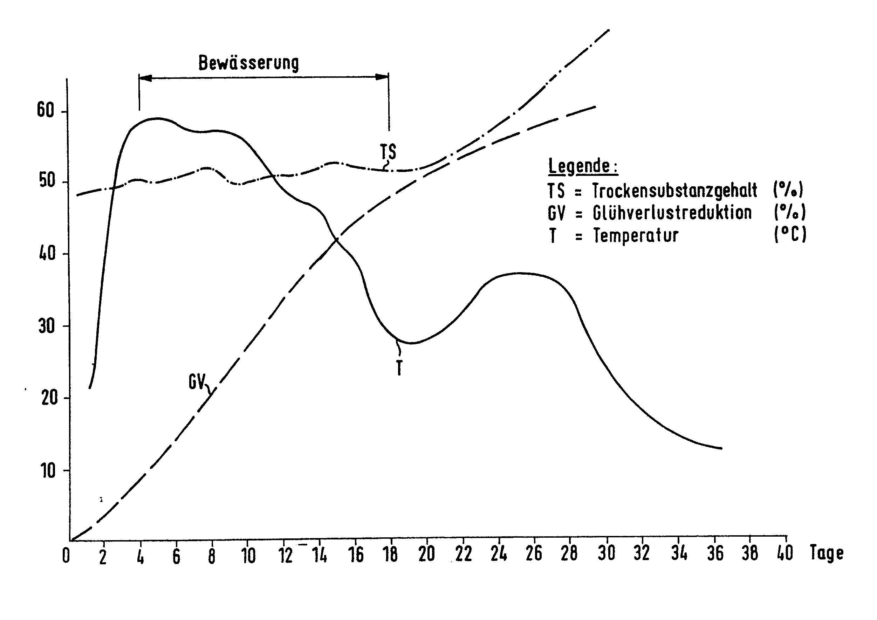

Das in der Zeichnung dargestellte Diagramm zeigt den Rotteverlauf in einer Betriebshalle mit frühzeitiger Befeuchtung der Presslinge gemäss Kennzeichen des Anspruchs 1 durch Aufzeichnung der relevanten Parameter «Temperatur», «Glühverlust-Reduktion» und «Gehalt an Trockensubstanz» in Abhängigkeit von der nach Tagen bemessenen Zeit. Daraus ist ersichtlich, dass durch eine erfindungsgemässe Zusatzbefeuchtung der Presslinge während der Hallenrotte sich die biochemische Stoffwechseltätigkeit ganz erheblich beschleunigen lässt. Würde die Zusatzbefeuchtung erst zwei Wochen nach Rottebeginn einsetzen, so würden sich nach rund 3,5 Wochen Glühverlustwerte im Material von 47,1 bis 49,5% einstellen. Weitaus erfolgreicher verläuft der Kompostierungsprozess jedoch, wenn erfindungsgemäss mit der Wasserberieselung zu einer Zeit angefangen wird, in welcher der Materialwassergehalt noch um 50% liegt, die Reaktionstemperatur jedoch schon die 50-°C-Marke überschritten hat. Wie bereits ausgeführt, reichte während eines Versuchs die Zugabe von insgesamt 156 kg Wasser pro m³ Ausgangsmaterial, verteilt über zwei Wochen, aus, um die thermophile Stufe zu verlängern, so dass ein schnellerer Substratumsatz erfolgte.

Auf diese Weise gelang es, ein Produkt zu erzeugen, das nach knapp drei Wochen Heissrotte einen Glühverlust von etwa 38% sowie ein C/N-Verhältnis von 18,6 besass und auch bei Kresse- und Selbsterhitzungstests sich als qualitativ hochwertiger Fertigkompost bzw. Spezialkompost erwies.

Lediglich der Vollständigkeit halber sei erwähnt, dass anstelle eines Pressverdichtens mit gleichem Erfolg auch ein sogenanntes Walkverdichten verwendet werden kann, ohne dass sich an der sonstigen, erfindungsgemässen Verfahrensweise etwas ändert.

## Patentansprüche

1. Verfahren zur Herstellung eines lagerbeständigen und biologisch aktiven Bodenverbesserungsmittels aus einem aus zerkleinertem Müll und teilweise entwässertem Klärschlamm mit einem Wassergehalt von etwa 50 bis 90 Gewichtsprozent bestehenden Gemisch, wobei das Gemisch einer Pressverformung auf bis zu etwa ein Drittel seines Volumens ohne Wasseraustritt unterworfen wird und die hierbei erhaltenen Presslinge durch Lagern in eine Temperatur von etwa 50 bis 70°C und eine Feuchte von weniger als 55 Gewichtsprozent aufweisenden Rottestapeln an der Luft einem Rottevorgang unterworfen und dabei getrocknet werden, dadurch gekennzeichnet, dass man die Rottestapel mit Beginn des dritten bis fünften Rottetages einer sieben bis vierzehn Tage dauernden Zusatzbefeuchtung unterwirft.

2. Verfahren nach Anspruch 1, dadurch gekennzeichnet, dass die Wasserzugabe zu Beginn der Zusatzbefeuchtung höher ist als am Ende derselben.

3. Verfahren nach Anspruch 1 oder 2, dadurch gekennzeichnet, dass im Rahmen der Zusatzbefeuchtung die tägliche Wasserzugabe in zwölf oder vierundzwanzig Intervalle aufgeteilt ist.

4. Verfahren nach einem der Ansprüche 1 bis 3, dadurch gekennzeichnet, dass im Laufe von vierzehn Tagen 156 kg Wasser pro Kubikmeter Gemisch zugesetzt werden.

5. Verfahren nach Anspruch 1, dadurch gekennzeichnet, dass man die Zusatzbefeuchtung der Rottestapel jeweils mittels eines über Kopf derselben angeordneten und mit Düsen versehenen Rohrleitungssystems durchführt.

## Claims

1. A method of producing a biologically active soil conditioner unaffected by storage from a mixture consisting of comminuted refuse and partially dewatered sewage sludge with a water content of about 50 to 90 percent by weight, wherein the mixture is subjected to a compression deformation to about one third of its volume without the escape of water and the pressed articles obtained in the course of this are subjected, in the air, to a rotting process by storing in rotting heaps having a temperature of about 50 to 70°C and a humidity of less than 55 percent by weight, and are dried in the course of this, characterised in that, at the beginning of the third to the fifth day of rotting, the rotting heap is subjected to an auxiliary moistening lasting seven to fourteen days.

2. A method according to Claim 1, characterised in that the addition of water is greater at the beginning of the auxiliary moistening than at the end thereof.

3. A method according to Claim 1 or 2, characterised in that, within the scope of the auxiliary moistening, the daily addition of water is divided into twelve or twenty-four intervals.

4. A method as claimed in one of the claims 1 to 3, characterised in that 156 kg of water per cubic metre of mixture are added in the course of fourteen days.

5. A method as claimed in Claim 1, characterised in that the auxiliary moistening of the rotting heap is carried out each time by means of a pipeline system disposed overhead and provided with nozzles.

## Revendications

1. Procédé pour la préparation d'un produit pour améliorer le sol, stable au stockage et biologiquement actif, à partir d'un mélange constitué d'ordures concassées et de boue décantée partiellement deshydratée avec une teneur en eau d'environ 50 à 90% en poids, procédé dans lequel le mélange est soumis à une conformation par pressage jusqu'à environ ⅓ de son volume sans relâcher d'eau, tandis que les ébauches de pressage ainsi obtenues sont soumises à l'air à un processus de rouissage par stockage dans des empilages de rouissage, présentant une température d'environ 50 à 70°C et une humidité de moins de 55% en poids, et ensuite séchées, procédé caractérisé en ce qu'on soumit l'empilage de rouissage au début du troisième ou cinquième jour de rouissage à une humidification supplémentaire durant sept à quatorze jours.

2. Procédé selon la revendication 1, caractérisé en ce que l'apport d'eau au début de l'humidification supplémentaire, est plus élevé qu'à la fin de celle-ci.

3. Procédé selon la revendication 1 ou 2, caractérisé en ce que dans le cadre de l'humidification supplémentaire, l'apport d'eau quotidien est réparti sur douze ou vingt-quatre intervalles.

4. Procédé selon l'une des revendications 1 à 3, caractérisé en ce que, au cours de quatorze jours, il est ajouté 156 kg d'eau par mètre cube de mélange.

5. Procédé selon la revendication 1, caractérisé en ce que l'on effectue l'humidification supplémentaire de la pile de rouissage, respectivement à l'aide d'un système de tuyauteries munies de buses, prévu au-dessus de la pile.